# FASCICULE DE BREVET EUROPEEN

(11) **EP 1 663 714 B1**
(45) Date de publication et mention de la délivrance du brevet: **06.06.2007**
(21) Numéro de dépôt: 04787328.6
(22) Date de dépôt: 08.09.2004
(51) Int. Cl.: B60R 7/04

(54) **AGENCEMENT D' UN RANGEMENT SOUS UN SIEGE DE VEHICULE AUTOMOBILE**
LAGERUNGSVORRICHTUNG UNTER EINEM SITZ FÜR EIN KRAFTFAHRZEUG
STORAGE DEVICE UNDER A SEAT FOR A MOTOR VEHICLE

(30) Priorité: 09.09.2003 FR 0310589
(43) Date de publication de la demande: 07.06.2006
(73) Titulaire: Renault s.a.s., 92100 Boulogne Billancourt (FR)
(72) Inventeur: HISCHKE, Udo, F-78113 Grand Champ (FR)
(86) Numéro de dépôt international: PCT/FR2004/002275
(87) Numéro de publication internationale: WO 2005/025926

(56) Documents cités:
- DE-A- 4 125 416
- DE-A- 10 156 163
- DE-A- 19 959 895
- DE-U- 29 922 249
- US-A- 3 815 799
- PATENT ABSTRACTS OF JAPAN vol. 2000, no. 24, 11 mai 2001 (2001-05-11) & JP 2001 180386 A (DAIHATSU MOTOR CO LTD), 3 juillet 2001 (2001-07-03)
- PATENT ABSTRACTS OF JAPAN vol. 1997, no. 08, 29 août 1997 (1997-08-29) & JP 09 099782 A (TOKYO SEAT KK;HONDA MOTOR CO LTD), 15 avril 1997 (1997-04-15)
- PATENT ABSTRACTS OF JAPAN vol. 015, no. 354 (M-1155), 6 septembre 1991 (1991-09-06) & JP 03 139452 A (NISSAN MOTOR CO LTD), 13 juin 1991 (1991-06-13)

## Description

L'invention concerne l'agencement d'un rangement sous un siège de véhicule automobile.

De façon à optimiser et à utiliser au maximum l'espace disponible, de nombreux véhicules sont équipés de rangements sous siège. Cependant, leur localisation rend ces rangements souvent difficilement accessibles lorsque le passager est assis sur le siège.

Il est connu d'utiliser des bacs pouvant coulisser sous le siège. Cependant, le passager doit se baisser, trouver la poignée et tirer sur le bac pour pouvoir accéder à son contenu. C'est une opération qui peut être difficile à réaliser lorsque le passager est assis sur le siège, d'autant plus que ses jambes gênent le passage du bac.

On connaît également, par la publication US-B1-6419313 un agencement dans lequel un accès au bac est ménagé dans l'assise du siège. La trappe d'accès au bac est recouverte par une portion de l'assise montée pivotante autour d'un axe situé au droit d'un bord avant de l'assise du siège. Cependant, il est impossible pour un passager assis sur le siège d'accéder à la trappe. Il doit en effet se lever puis faire pivoter la portion d'assise autour de son axe afin d'accéder au contenu du bac.

Le document JP-A-03139452 propose un agencement d'un rangement comprenant un bac de rangement et un coussin d'assise, formé d'une seule pièce et présentant sur son bord avant une encoche débouchant, en fonction de la position du bac de rangement, dans une surface délimitant une partie supérieure de celui-ci et une partie inférieure du coussin d'assise. Compte tenu de son encombrement, cet agencement de rangement est réservé à un siège destiné à deux passagers, au moins, entre lesquels il doit être installé, et n'est pas adaptable à un siège destiné à un occupant unique. Par ailleurs, l'accès au contenu du bac se fait après rotation du bac, opération mal aisée et pénible pour un utilisateur assis.

Afin de pallier ces inconvénients, l'invention a pour objet l'agencement d'un rangement sous siège facilement accessible lorsque le passager est assis.

L'invention a aussi pour objet l'agencement d'un rangement sous siège dans lequel le coulissement du bac sous siège est facilité.

L'invention a aussi pour objet l'agencement d'un rangement sous siège permettant de ranger de petits objets.

A cet effet, l'invention propose un agencement du type cité ci-dessus, caractérisé en ce qu'il comporte un bac de rangement et un coussin d'assise formé d'une seule pièce et présentant sur un bord avant une encoche débouchant de façon permanente dans une surface délimitant une partie supérieure du bac de rangement et une partie inférieure du coussin assise.

Selon d'autres caractéristiques de l'invention:
- Le bac de rangement est monté à translation entre une position rentrée, dans laquelle il se trouve entièrement sous l'assise du siège et une position sortie, dans laquelle son contenu est au moins partiellement accessible.
- La paroi avant du bac de rangement forme poignée de tirage.
- Un support horizontal dont le pourtour comporte un rebord vertical est rattaché à la paroi avant du bac de rangement, en regard de l'encoche de façon à former un réceptacle.
- Le pourtour de la portion de paroi de fond du bac située en regard de l'encoche comporte un rebord vertical de façon à former un réceptacle.

D'autres caractéristiques et avantages de l'invention apparaîtront à la lecture de la description d'exemples de réalisation d'un agencement de rangement sous un siège de véhicule automobile en référence aux dessins annexés dans lesquels:
- La figure 1 est une vue en perspective d'une assise de siège comportant l'agencement de rangement selon l'invention, le bac de rangement étant en position fermée.
- La figure 2 est une vue en perspective de l'agencement de la figure 1, le bac étant en position ouverte.

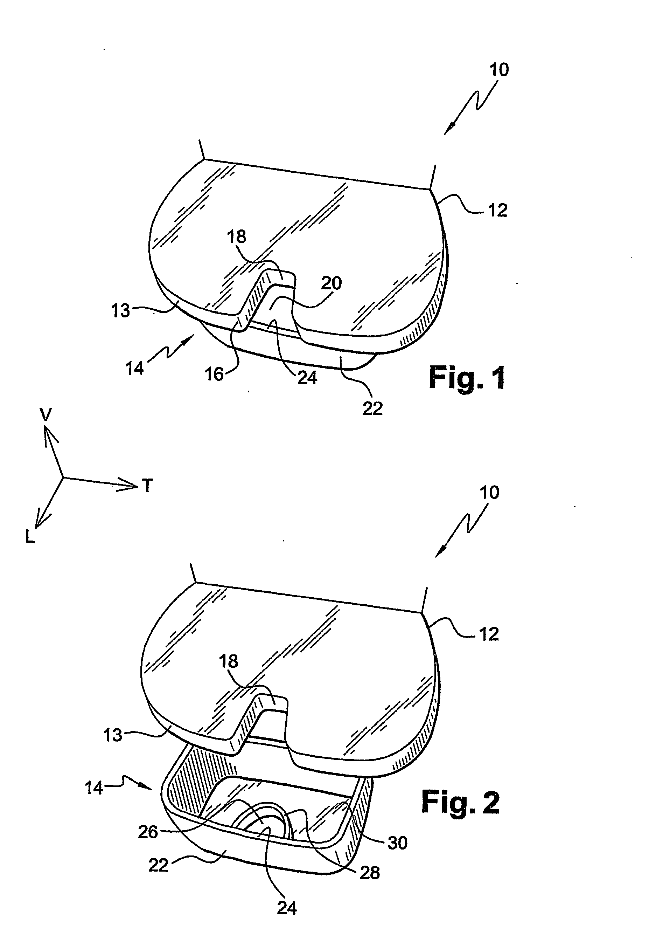

Dans la description qui va suivre, on adoptera à titre non limitatif une orientation longitudinale, verticale et transversale indiquée par le trièdre L,V,T de la figure 1.

Tel que représenté à la figure 1, un siège 10 comporte une assise 12 munie d'un coussin d'assise 13, formé d'une seule pièce, sous laquelle se trouve un bac de rangement 14, dans sa position rentrée dans laquelle il se trouve entièrement sous l'assise 12 du siège 10.

Un bord avant 16 du coussin d'assise 13 comporte une encoche 18 débouchant dans une surface 20 formant une délimitation entre la partie supérieure du bac de rangement 14 et la partie inférieure de l'assise 12 du siège 10.

Tel que représenté à la figure 2, le bac de rangement 14 est passé de sa position rentrée à sa position sortie, dans laquelle son contenu est au moins partiellement accessible, par une translation longitudinale vers l'avant du véhicule, le long de rails, par exemple (non représentés).

La partie 24 de paroi avant 22 du bac de rangement 14 en regard de l'encoche 18 forme une poignée de tirage qui permet de faire coulisser longitudinalement le bac 14 de façon à pouvoir y introduire des objets plus encombrants, ne pouvant pas passer par l'encoche 18.

Dans le cas où le siège passager 10 n'est pas occupé, le conducteur du véhicule peut facilement et en permanence introduire un objet dans le bac de rangement 14 sans avoir pour cela à effectuer de manipulation particulière. Cet agencement a donc pour avantage de permettre au conducteur de rester concentré.

Dans le cas où le siège 10 est occupé par un passager, ce dernier peut facilement et à tout moment glisser un objet dans le bac de rangement 14, sans avoir à se lever ou à changer de position.

De plus, si le passager veut accéder au bac de rangement 14, il peut faire coulisser longitudinalement le bac 14 depuis sa position rentrée jusqu'à sa position sortie en effectuant une poussée sur la partie 24 de la paroi avant 22 formant poignée. S'il veut ramener le bac 14 en position rentrée, le passager doit tirer sur la partie 24 de la paroi pour faire coulisser longitudinalement le bac vers l'arrière du véhicule.

Dans une variante de l'agencement représentée à la figure 2, un support horizontal 26 est rattaché à la paroi avant 22 du bac de rangement 14 en regard de l'encoche 18. Le pourtour du support 26 comporte un rebord 28 de façon que la paroi 26 et le rebord 28 forment un réceptacle tel qu'un vide-poches, par exemple.

Cet agencement permet ainsi facilement au conducteur ou au passager de poser de petits objets, tels que des clés ou de la monnaie qui restent facilement accessibles, sans qu'il soit nécessaire de les chercher.

Dans une autre variante, non représentée, une portion de la paroi de fond 30 du bac de rangement 14 se situe en vis-à-vis de l'encoche 18. Le pourtour de la portion comporte un rebord vertical. Selon la hauteur du rebord, le réceptacle ainsi formé permet de retenir des objets de petite dimension (clés, porte-monnaie,...) ou de taille plus importante (téléphone portable, parapluie,...)

Ainsi, le conducteur ou le passager peut glisser un objet à travers l'encoche 18. Lorsque le véhicule est en mouvement, le rebord empêche alors l'objet de se déplacer dans le bac de rangement 14 de façon que le conducteur ou le passager puisse facilement le retrouver en passant la main à travers l'encoche 18.

## Revendications

1. Agencement d'un rangement sous un siège (10) de véhicule automobile, **caractérisé en ce qu'**il comporte un bac de rangement (14) et un coussin d'assise (12), formé d'une seule pièce, et présentant sur un bord avant (16) une encoche (18) débouchant de façon permanente dans une surface (20) délimitant une partie supérieure du bac de rangement (14) et une partie inférieure du coussin assise (12).

2. Agencement selon la revendication 1, **caractérisé en que** le bac de rangement (14) est monté à translation entre une position rentrée, dans laquelle il se trouve entièrement sous l'assise (12) du siège (10) et une position sortie, dans laquelle son contenu est au moins partiellement accessible.

3. Agencement selon la revendication précédente, **caractérisé en ce que** la paroi avant (22) du bac de rangement (14) forme poignée de tirage.

4. Agencement selon l'une quelconque des revendications précédentes, **caractérisé en ce qu'**un support horizontal (26) dont le pourtour comporte un rebord vertical (28) est rattaché à la paroi avant (22) du bac de rangement (14), en regard de l'encoche (18), de façon à former un réceptacle.

5. Agencement selon l'une quelconque des revendications 1 à 3, **caractérisé en ce que** le pourtour de la portion de paroi de fond (30) du bac (14) située en regard de l'encoche (18) comporte un rebord vertical de façon à former un réceptacle.

## Claims

1. Under-seat (10) storage arrangement for a motor vehicle, **characterized in that** it comprises a storage binnacle (14) and a seat cushion (12), formed as a single piece and having, on a front edge (16) a cut-out (18) opening permanently into a surface (20) defining an upper part of the storage binnacle (14) and a lower part of the seat cushion (12).

2. Arrangement according to Claim 1, **characterized in that** the storage binnacle (14) is mounted so that it can move translationally between a retracted position in which it lies entirely under the seat cushion (12) of the seat (10) and an open position in which its contents are at least partially accessible.

3. Arrangement according to the preceding claim, **characterized in that** the front wall (22) of the storage binnacle (14) forms a pull-handle.

4. Arrangement according to any one of the preceding claims, **characterized in that** a horizontal support (26) the periphery of which comprises a vertical upstand (28) is attached to the front wall (22) of the storage binnacle (14), facing the cut-out (18), so as to form a receptacle.

5. Arrangement according to any one of Claims 1 to 3, **characterized in that** the periphery of that portion of the bottom wall (30) of the binnacle (14) that lies facing the cut-out (18) comprises a vertical upstand so as to form a receptacle.

## Patentansprüche

1. Lagerungsvorrichtung unter einem Sitz (10) eines Kraftfahrzeugs, **dadurch gekennzeichnet, dass** sie einen Lagerungsbehälter (14) und ein Sitzkissen (12) umfasst, gebildet aus einem Stück und umfassend an einem vorderen Rand (16) eine Kerbe (18), die permanent in eine Fläche (20) mündet, die einen oberen Teil des Lagerungsbehälters (14) und einen unteren Teil des Sitzkissens (12) begrenzt.

2. Vorrichtung nach Anspruch 1, **dadurch gekennzeichnet, dass** der Lagerungsbehälter (14) in Translation zwischen einer eingezogenen Position, in der er sich zur Gänze unter der Sitzfläche (12) des Sitzes (10) befindet, und einer ausgezogenen Position, in der sein Inhalt zumindest teilweise zugänglich ist, montiert ist.

3. Vorrichtung nach dem vorhergehenden Anspruch, **dadurch gekennzeichnet, dass** die vordere Wand (22) des Lagerungsbehälters (14) einen Griff zum Ziehen bildet.

4. Vorrichtung nach einem der vorhergehenden Ansprüche, **dadurch gekennzeichnet, dass** ein horizontaler Träger (26), dessen Umfang einen vertikalen Rand (28) trägt, an der vorderen Wand (22) des Lagerungsbehälters (14) gegenüber der Kerbe (18) angeordnet ist, um ein Aufnahmefach zu bilden.

5. Vorrichtung nach einem der Ansprüche 1 bis 3, **dadurch gekennzeichnet, dass** der Umfang des Bodenwandabschnitts (30) des Behälters (14), der sich gegenüber der Kerbe (18) befindet, einen vertikalen Rand umfasst, um ein Aufnahmefach zu bilden.
